(19) Europäisches Patentamt
European Patent Office
Office européen des brevets

(11) **EP 4 258 021 B1**

(12) **EUROPÄISCHE PATENTSCHRIFT**

(45) Veröffentlichungstag und Bekanntmachung des Hinweises auf die Patenterteilung:
**06.11.2024 Patentblatt 2024/45**

(21) Anmeldenummer: **22167168.8**

(22) Anmeldetag: **07.04.2022**

(51) Internationale Patentklassifikation (IPC):
**G01S 15/10** *(2006.01)*     **G01S 15/58** *(2006.01)*
**G01S 15/931** *(2020.01)*

(52) Gemeinsame Patentklassifikation (CPC):
**G01S 15/102; G01S 15/582; G01S 15/931**

(54) **VERFAHREN UND VORRICHTUNG ZUR UNTERSUCHUNG DES UMFELDES EINES FAHRZEUGS MITTELS ULTRASCHALL-SIGNALEN**

METHOD AND DEVICE FOR EXAMINING THE ENVIRONMENT OF A VEHICLE BY MEANS OF ULTRASONIC SIGNALS

PROCÉDÉ ET DISPOSITIF D'EXAMEN DE L'ENVIRONNEMENT D'UN VÉHICULE AU MOYEN DES SIGNAUX ULTRASONORES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.10.2023 Patentblatt 2023/41**

(73) Patentinhaber: **Elmos Semiconductor SE**
**44227 Dortmund (DE)**

(72) Erfinder: **Spiegel, Egbert**
**45770 Marl (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**WO-A1-2014/180609     WO-A2-02/45998**

**Beschreibung**

Die Erfindung betrifft ein Verfahren und eine Vorrichtung zur Untersuchung des Umfeldes eines Fahrzeugs mittels Analyse von durch Reflektion an einem Objekt im Umfeld des Fahrzeugs entstehenden Echosignalen ausgesandter Ultraschall-Signale.

Ultraschall-Messsysteme zur Untersuchung des Umfeldes eines Fahrzeugs beispielsweise bei einem Einparkvorgang sind grundsätzlich bekannt. Bei diesen Messsystemen sendet ein Ultraschall-Sender Ultraschall-Burstsignale aus, die eine bestimmte Anzahl von mit einer Frequenz aufeinanderfolgenden Ultraschall-Pulsen aufweisen. Sofern sich im Umfeld des Fahrzeugs, in das das Ultraschall-Burstsignal gesendet worden ist, Objekte befinden, werden von diesen auf Grund von Reflektionen Echosignale erzeugt, die von einem Ultraschall-Empfänger empfangen werden. Typischerweise erfolgt das Senden und Empfangen von Ultraschall-Signalen durch ein und dasselbe Element, nämlich durch einen Ultraschall-Transducer.

WO 2014/180609 A1 offenbart ein Verfahren zur Messung des Abstands zwischen einem Sensorsystem und einem Objekt mittels Ultraschall, wobei ein Sender einen ersten Ultraschallburst und einen zweiten Ultraschallburst aussendet.

Mit den bekannten Systemen lässt sich z.B. der Abstand eines Objekts vom Fahrzeug bestimmen.

Mitunter ist es allerdings gewünscht, mehr Informationen über das detektierte Objekt, nämlich beispielsweise dessen Relativgeschwindigkeit zum Fahrzeug, bestimmen zu können.

Aufgabe der Erfindung ist es, ein Verfahren und eine Vorrichtung zur Untersuchung des Umfeldes eines Fahrzeugs auf die Existenz potenzieller Objekte anzugeben, wobei mehrere das Objekt charakterisierende Parameter ermittelt werden können.

Zur Lösung dieser Aufgabe wird mit der Erfindung ein Verfahren zur Untersuchung des Umfeldes eines Fahrzeugs mittels Analyse von durch Reflektion an einem Objekt im Umfeld des Fahrzeugs entstehenden Echosignalen ausgesandter Ultraschall-Signale vorgeschlagen, wobei bei dem Verfahren

- in denselben Bereich des Umfeldes des Fahrzeugs und in gleicher Richtung mittels eines Ultraschall-Senders innerhalb sich wiederholender Messzyklen jeweils ein Ultraschall-Burstsignal mit einer ersten Anzahl von mit einer Frequenz aufeinanderfolgenden Ultraschall-Pulsen und zeitlich versetzt zu diesem Ultraschall-Burstsignal ein Ultraschall-Burstsignal mit einer zweiten Anzahl von mit der gleichen oder einer anderen Frequenz aufeinanderfolgenden Ultraschall-Pulsen ausgesendet werden, wobei die zweite Anzahl von Ultraschall-Pulsen verschieden ist von der ersten Anzahl von Ultraschall-Pulsen,
- an einem sich potenziell in dem besagten Bereich des Umfeldes des Fahrzeugs befindenden Objekt durch Reflektion der beiden Ultraschall-Burstsignale zeitlich versetzte Echosignale entstehen, die mittels eines Ultraschall-Empfängers empfangen werden, und
- die Echosignale beider Ultraschall-Burstsignale zur Bestimmung verschiedener Parameter eines sich potenziell in dem besagten Bereich des Umfeldes des Fahrzeugs befindenden Objekts ausgewertet werden,
- wobei anhand des Echosignals des Ultraschall-Burstsignals mit der geringeren Anzahl an Ultraschall-Pulsen die Entfernung eines sich potenziell in dem besagten Bereich des Umfeldes des Fahrzeugs befindenden Objekts zum Fahrzeug ermittelt wird und
- wobei anhand des Echosignals des Ultraschall-Burstsignals mit der höheren Anzahl an Ultraschall-Pulsen die Geschwindigkeit ermittelbar ist, mit der sich das Fahrzeug und ein sich potenziell in dem besagten Bereich des Umfeldes des Fahrzeugs befindendes Objekt relativ zueinander in Richtung des Aussendens beider Ultraschall-Burstsignale oder entgegengesetzt dazu bewegen.

Nach der Erfindung werden in wiederholt auftretenden Messzyklen jeweils mindestens zwei unterschiedliche Ultraschall-Burstsignale ausgesendet. Diese Signale unterscheiden sich hinsichtlich zumindest ihrer Längen, d.h. hinsichtlich z.B. ihrer Anzahl von Pulsen. Dabei wird ein vergleichsweise kurzes Ultraschall-Burstsignal verwendet, um anhand seines Echos den Ort, an dem im Umfeld des Fahrzeugs ein Objekt erkannt worden ist, und die Entfernung des Objekts zum Fahrzeug ermitteln zu können. Im demodulierten Echosignal (Hüllkurve) erscheint mit einem gewissen Zeitversatz zum Aussendezeitpunkt des kurzen Ultraschall-Burstsignals eine Signalspitze, wobei aus der Schallgeschwindigkeit dann der Abstand des Objekts zum Fahrzeugs ermittelbar ist. Das längere Ultraschall-Burstsignal wird genutzt, um anhand der Analyse einer Dopplerfrequenzverschiebung im Echosignal die Geschwindigkeit des Objekts relativ zum Fahrzeug in Ausbreitungsrichtung des Ultraschall-Burstsignals ermitteln zu können. Mit Hilfe des zweiten Ultraschall-Burstsignals wird also die spektrale (Doppler-)Verschiebung dieses Signals in der Umgebung des Objekts ermittelt.

Die Aufteilung eines Messzyklus in zwei Messphasen (eine Messphase für das kurzen Ultraschall-Burstsignal und die zweite Messphase für das lange Ultraschall-Burstsignal) hat den Vorteil, dass nun auch im Nahbereich Objekte erfasst werden können, wenn, wie es heutzutage typischerweise der Fall ist, für den Ultraschall-Sender und den Ultraschall-Empfänger eine Einheit, nämlich ein Ultraschall-Transducer, eingesetzt wird.

Phasenverschiebungen, die durch eine Vielzahl von Reflektoren hervorgerufen werden können (beispielsweise durchschwingende Arme eines Fußgängers), können grundsätzlich beliebige Geschwindigkeiten vortäuschen. Diese werden aber über die Länge des langen Ultraschall-Burstsignals sozusagen herausgemittelt.

Die Reihenfolge, in der die beiden verschieden langen Ultraschall-Burstsignale ausgesendet und ausgewertet werden, ist vertauschbar. Die Messphasen schließen vorteilhafterweise unmittelbar aneinander an. Der Zeitversatz, der zwischen dem Aussenden des kurzen Ultraschall-Burstsignals und dem Empfang der die Existenz eines Objekts anzeigenden Echosignalspitze ermittelt wird, kann in der längeren Messphase genutzt werden, um in dem Echosignal des längeren Ultraschall-Burstsignals diejenige Position festzulegen, an der derjenige Echosignalabschnitt zu untersuchen ist, der aus der Dopplerverschiebung infolge einer Bewegung des Objekts resultiert. Die Zeit zwischen dem Empfang beider Echosignale ist ausreichend kurz, so dass angenommen werden kann, dass sich das Objekt kaum merklich zwischen beiden Messungen weiterbewegt hat.

Die Vorteile der Erfindung lassen sich wie folgt zusammenfassen:

- Bestimmung der Geschwindigkeit eines Objekts mittels eines kombinierten Messzyklus aus zwei Messphasen.
- Bestimmung der Geschwindigkeit komplexer Objekte wie beispielsweise Personen. Da sich die Echospitzen eines komplexen Objekts zwischen zwei Messungen durchaus signifikant ändern können, ist eine Zuordnung der Echospitzen beider Messungen zum Objekt mit bisherigen Verfahren kaum möglich. Hier hilft erfindungsgemäß die Lokalisierung des Objekts mittels des Echosignals des kurzen Ultraschall-Burstsignals. Der Einfluss auf die mittlere Dopplerverschiebung bei Verwendung des langen Ultraschall-Burstsignals ist dagegen gering.
- Abschätzung der Fahrzeuggeschwindigkeit durch beispielsweise Auswertung von Bodenechosignalen.

Die Erfindung wurde in praktischen Versuchen auf ihre Alltagstauglichkeit umfangreich getestet. Dabei hat sich herausgestellt, dass das Ultraschall-Burstsignal mit der geringeren Anzahl von Pulsen zweckmäßigerweise 10 bis 20 Pulse, insbesondere 16 Pulse, und/oder eine Länge von 190 μs bis 380 μs, insbesondere 300 μs, aufweist und dass das Ultraschall-Burstsignal mit der höheren Anzahl von Pulsen vorteilhafterweise 170 bis 220 Pulse, insbesondere 190 Pulse, und/oder eine Länge von 3,2 ms bis 4,0 ms, insbesondere 3,6 ms, aufweist. In den praktischen Versuchen hat sich herausgestellt, dass sich die beiden Ultraschall-Burstsignale hinsichtlich Länge bzw. Pulsanzahl um den Faktor 8 bis 15 und vorzugsweise um den Faktor 10 voneinander unterscheiden sollten.

Die Analyse der Echosignal erfolgt typischerweise mittels einer Signalverarbeitungseinheit.

Nach der Erfindung werden also unterschiedliche Ultraschall-Burstsignale ausgesendet. Das bedeutet allerdings nicht zwangsläufig, dass die unterschiedlichen Signale notwendigerweise getrennt voneinander gesendet werden. Es ist ebenfalls möglich, ein einziges Ultraschall-Burstsignal zu senden, dieses aber in beispielsweise zwei oder noch mehr Abschnitte zu unterteilen und jeden dieser Abschnitte sozusagen als ein Ultraschall-Burstsignal im Sinne der Erfindung zu betrachten.

Die obige Aufgabe wird erfindungsgemäß ferner gelöst durch eine Vorrichtung zur Untersuchung des Umfeldes eines Fahrzeugs mittels Analyse von durch Reflektion an einem Objekt im Umfeld des Fahrzeugs entstehenden Echosignalen ausgesandter Ultraschall-Signale, mit

- einem Ultraschall-Sender zum innerhalb sich wiederholender Messzyklen jeweils zeitlich versetzt erfolgenden Aussenden von zwei Ultraschall-Burstsignalen in gleicher Richtung in denselben Bereich des Umfeldes des Fahrzeugs, wobei das eine Ultraschall-Burstsignale eine erste Anzahl von mit einer Frequenz aufeinanderfolgenden Ultraschall-Pulsen und das andere Ultraschall-Burstsignal eine von der ersten Anzahl verschiedene zweite Anzahl von mit der gleichen oder einer anderen Frequenz aufeinanderfolgenden Ultraschall-Pulsen aufweist,
- einem Ultraschall-Empfänger zum Empfang von Echosignalen der beiden Ultraschall-Burstsignale bei Reflektion an einem sich potenziell in dem besagten Bereich des Umfeldes des Fahrzeugs befindenden Objekt und
- einer Signalverarbeitungseinheit zur Auswertung der beiden Echosignale zur Bestimmung verschiedener Parameter eines sich potenziell in dem besagten Bereich des Umfeldes des Fahrzeugs befindenden Objekts,
- wobei anhand des Echosignals des Ultraschall-Burstsignals mit der geringeren Anzahl an Ultraschall-Pulsen die Entfernung eines sich potenziell in dem besagten Bereich des Umfeldes des Fahrzeugs befindenden Objekts zum Fahrzeug ermittelt wird und
- wobei anhand des Echosignals des Ultraschall-Burstsignals mit der höheren Anzahl an Ultraschall-Pulsen die Geschwindigkeit ermittelbar ist, mit der sich das Fahrzeug und ein sich potenziell in dem besagten Bereich des Umfeldes des Fahrzeugs befindendes Objekt relativ zueinander bewegen, und zwar in ihrer Relativbewegungsrichtung oder deren Komponente senkrecht zum Aussenden beider Ultraschall-Burstsignale.

Die Erfindung wird nachfolgend anhand eines Ausführungsbeispiels und unter Bezugnahme auf die Zeichnung näher erläutert. Im Einzelnen zeigen dabei:

Fig. 1    eine Draufsicht auf die Front eines Fahrzeugs mit in dessen Stoßfänger angeordneten Ultraschall-Transducern,

Fig. 2    den zeitlichen Verlauf der an einem Ultraschall-Transducer anliegenden Betriebsspannung für das Aussenden zweier unterschiedlicher Ultraschall-Burstsignale und des ebenfalls am Ultraschall-Transducer anliegenden Verlaufs der Spannung während des Empfangs der Echosignale der beiden Ultraschall-Burstsignale,

Fig. 3    eine Darstellung der Hüllkurven der zeitlichen Verläufe von Ansteuersignalen und Echosignalen für beide Ultraschall-Burstsignale, wobei die Hüllkurven, also die demodulierten Signale, in dem Diagramm übereinandergelegt sind, und

Fig. 4    das Prinzip der Signalauswahl zur Berechnung der Dopplerverschiebung (spektrale Dopplerverteilung in der Umgebung eines sich bewegenden Objekts).

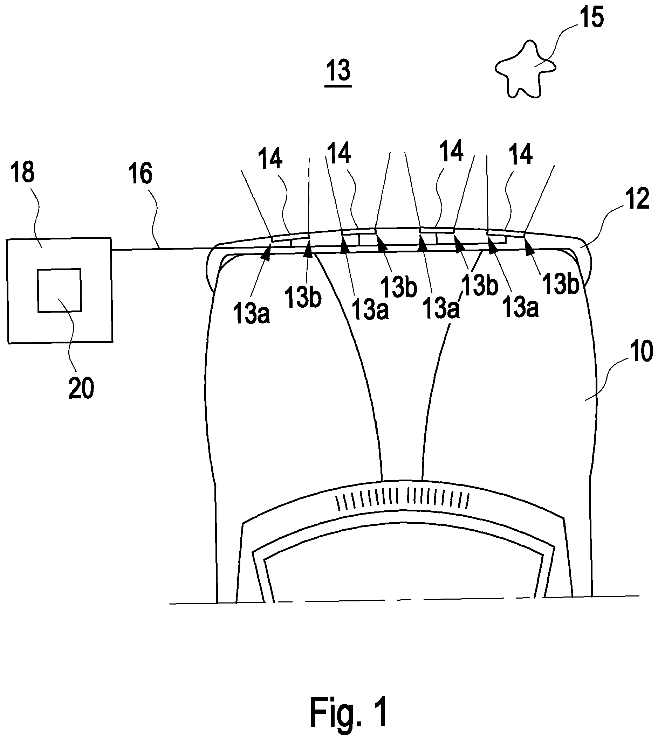

Fig. 1 zeigt einen typischen Anwendungsfall für die Untersuchung des Umfeldes eines Fahrzeugs mittels Ultraschall-Signalen. In Fig. 1 ist in Draufsicht die Front eines Fahrzeugs 10 gezeigt, in dessen Stoßfänger 12 in diesem Ausführungsbeispiel vier alternierend als Ultraschall-Sender (angedeutet mit 13a) und Ultraschall-Empfänger (angedeutet mit 13b) arbeitende Ultraschall-Transducer 14 angeordnet sind. Diese senden Ultraschall-Burstsignale in den Bereich 13 des vorderen Umfeldes, in dem sich ein Objekt 15 befinden kann. Über einen Datenkommunikationsbus 16 sind die Ultraschall-Transducer 14 mit einer Ansteuer- und Auswerteeinheit 18 verbunden, die mit einer Signalverarbeitungseinheit 20 versehen ist.

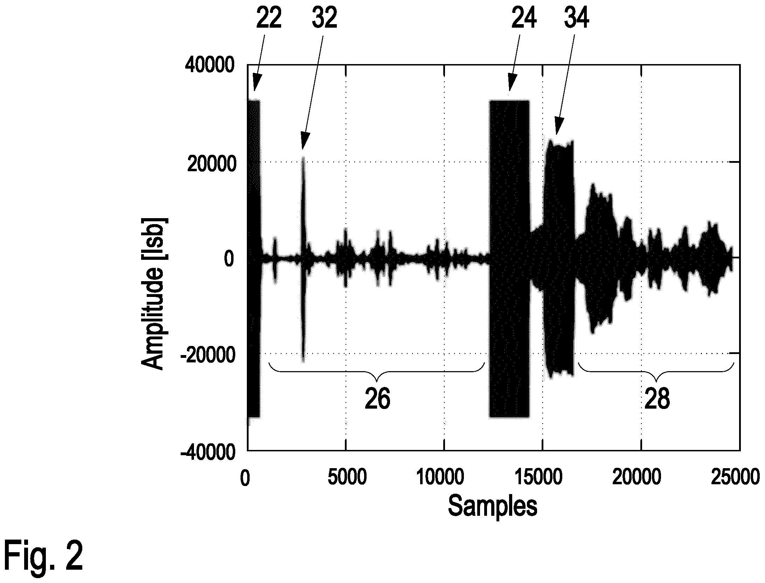

Fig. 2 zeigt die zeitliche Abfolge des Aussendens eines ersten in diesem Fall kurzen Ultraschall-Burstsignals 22 und des Aussendens eines zweiten in diesem Fall längeren Ultraschall-Burstsignals 24. Auch dargestellt ist der Verlauf der Echosignale 26, 28, die jeweils auf das zugehörige Ultraschall-Burstsignal 22 bzw. 24 folgen. Zur Verdeutlichung ist die Amplitude der Echosignale 26, 28 deutlich verstärkt. Normalerweise ist die Amplitude der den Ultraschall-Transducer 14 anregenden Ultraschall-Burstsignale 22, 24 wesentlich größer als diejenige der jeweiligen Echosignale 26, 28.

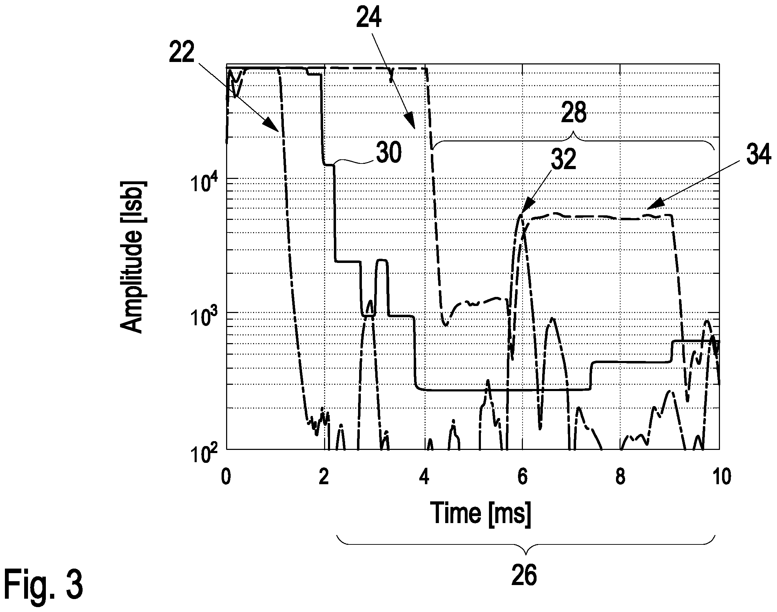

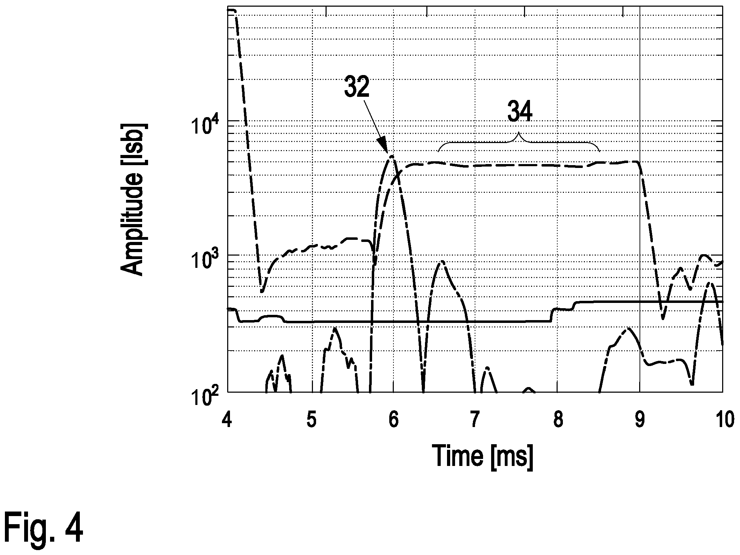

Um das Verfahren zu verdeutlichen, sind die demodulierten Signale 22, 26 und 24, 28, also die Hüllkurven, in dem Diagramm gemäß Fig. 3 übereinandergelegt. In dieser Darstellung beginnen also die beiden Echosignale 26, 28 zum gleichen Zeitpunkt, was aber nur zu Darstellungszwecken so gewählt ist. In Fig. 3 ist in durchgezogener Linie die Hüllkurve zum kurzen Ultraschall-Burstsignal 22 und dessen Echosignal 26 gezeigt, während die Hüllkurve zum langen Ultraschall-Burstsignal 24 mit zugehörigem Echosignal 28 in gestrichelter Linie gezeigt ist. Zusätzlich ist dann noch in strichpunktierter Linie der Verlauf der Schwellwertvorgabe 30 für die Auswertung gezeigt. Lediglich diejenigen Signalanteile, die oberhalb der Schwellwertvorgabe 30 liegen, werden ausgewertet. Zu erkennen ist im Echosignal 26 des kurzen Ultraschall-Burstsignals 22 eine Echospitze 32, die angibt, dass ein Objekt erkannt worden ist. In diesem Ausführungsbeispiel läuft die Echospitze 32 nach etwa 6 ms ab Beginn des Aussendens des kurzen Ultraschall-Burstsignals 22 ein. Bezogen auf das Echosignal 28 des langen Ultraschall-Burstsignals 24 befindet sich ab dem Zeitpunkt von 6 ms in diesem Echosignal 28 ein Plateau 34, das für die Ermittlung der Dopplerverschiebung und deren Auswertung genutzt wird. Der insoweit relevante Teil der Kurven des Diagramms gemäß Fig. 3 ist in Fig. 4 nochmals dargestellt.

Nachfolgend wird ein Beispiel für die Auswertung der beiden Echosignale 26, 28 beschrieben.

Zunächst werden die Echospitzen des kurzen Echosignals 26, die sich über der Schwellwertvorgabe 30 befinden, bestimmt. Im zweiten Schritt wird der Bereich (Plateau 34) im langen Echosignal 28, in dem die Dopplerberechnung vorgenommen werden soll, ermittelt.

Auf Grund verschiedener Überlegungen ist es zweckmäßig, die Dopplerberechnung anhand der Berechnung des Schwerpunkts des Spektrums aus den komplexen Zeitsignalen direkt zu berechnen (erstes spektrales Moment).

Das Verfahren geht von dem *komplexen* Hüllkurvensignal aus, das im Sensor in zeitdiskreter Form vorliegt:

$$V_k = I_k + jQ_k.$$

Für den Auswertebereich wird folgende Summe gebildet:

$$R = \sum_{k=0}^{N-1} V_k \cdot V_{k+1}^* - V_0 \cdot V_{N-1}^*$$

Die Geschwindigkeit ergibt sich aus dem Winkel von R, sowie der Wellenlänge $\lambda$ und der Abtastfrequenz $T_{sample}$:

$$v = -\frac{\lambda}{4\pi T_{Sample}} arg(R)$$

Wird die Berechnung von R nicht nur über die Dauer des langen Signals bei Überschreiten der Schwelle, sondern über die gesamte Dauer der Messung über alle Werte durchgeführt, entspricht das dem Schwerpunkt der Dopplerverschiebung im vom Sensor erfassten Volumen. Da auch ohne ein eindeutiges Hindernis ein erheblicher über dem Schwellwert liegender Signalanteil vom Boden reflektiert wird (Clutter), lässt sich so die Geschwindigkeit des Fahrzeugs ermitteln. Sind mehrere Hindernisse vorhanden, dominiert dasjenige mit der höchsten Amplitude. Um dies und das gesamte Verfahren etwas näher zu erläutern, wird V in Polarkoordinaten dargestellt.

$$V = |V|e^{j\Phi}$$

Für R ergibt sich (der Einfachheit halber ohne Korrekturterm)

$$R = \sum_{k=0}^{N-1} |V_k|\, e^{j\Phi_k} \cdot |V_{k+1}|e^{-j\Phi_{k+1}} = \sum_{k=0}^{N-1} |V_k| \cdot |V_{k+1}|e^{j(\Phi_k - \Phi_{k+1})}$$

Die Phasendifferenz im Exponenten beschreibt näherungsweise die Frequenzkomponente an der Stelle k

$$f_k \approx \frac{1}{2\pi}\frac{\Phi_k - \Phi_{k+1}}{T_{Sample}} = \frac{1}{2\pi}\frac{\Delta\Phi_k}{T_{Sample}}$$

Die Frequenzkomponenten werden also mit dem Quadrat ihrer Amplituden gewichtet.

## BEZUGSZEICHENLISTE

| | |
|---|---|
| 10 | Fahrzeug |
| 12 | Stoßfänger |
| 13 | Bereich im Umfeld des Fahrzeugs |
| 13a | Ultraschall-Empfänger |
| 13b | Ultraschall-Sender |
| 14 | Ultraschall-Transducer |
| 15 | Objekt |
| 16 | Datenkommunikationsbus |
| 18 | Auswerteeinheit |
| 20 | Signalverarbeitungseinheit |
| 22 | kürzeres Ultraschall-Burstsignal |
| 24 | längeres Ultraschall-Burstsignal |
| 26 | kürzeres Echosignal |
| 28 | längeres Echosignal |
| 30 | Schwellwertvorgabe |
| 32 | Echospitze |
| 34 | Plateau |

**Patentansprüche**

1. Verfahren zur Untersuchung des Umfeldes eines Fahrzeugs mittels Analyse von Echosignalen, die durch Reflektion von ausgesandten Ultraschall-Signalen an einem Objekt im Umfeld des Fahrzeugs entstehen, wobei bei dem Verfahren

- in denselben Bereich (13) des Umfeldes des Fahrzeugs (10) und in gleicher Richtung mittels eines Ultraschall-Senders (13a) innerhalb sich wiederholender Messzyklen jeweils ein Ultraschall-Burstsignal (22) mit einer ersten Anzahl von mit einer Frequenz aufeinanderfolgenden Ultraschall-Pulsen und zeitlich versetzt zu diesem Ultraschall-Burstsignal (22) ein Ultraschall-Burstsignal (24) mit einer zweiten Anzahl von mit der gleichen oder einer anderen Frequenz aufeinanderfolgenden Ultraschall-Pulsen ausgesendet werden, wobei die zweite Anzahl von Ultraschall-Pulsen verschieden ist von der ersten Anzahl von Ultraschall-Pulsen,

- an einem sich potenziell in dem besagten Bereich (13) des Umfeldes des Fahrzeugs (10) befindenden Objekt (15) durch Reflektion der beiden Ultraschall-Burstsignale (22, 24) zeitlich versetzte Echosignale (26,28) entstehen, die mittels eines Ultraschall-Empfängers (13b) empfangen werden, und

- die Echosignale (26, 28) beider Ultraschall-Burstsignale (22,24) zur Bestimmung verschiedener Parameter eines sich potenziell in dem besagten Bereich (13) des Umfeldes des Fahrzeugs (10) befindenden Objekts (15) ausgewertet werden,

- wobei anhand des Echosignals (26) des Ultraschall-Burstsignals (22) mit der geringeren Anzahl an Ultraschall-Pulsen die Entfernung eines sich potenziell in dem besagten Bereich (13) des Umfeldes des Fahrzeugs (10) befindenden Objekts (15) zum Fahrzeug (10) ermittelt wird und

- wobei anhand des Echosignals (28) des Ultraschall-Burstsignals (24) mit der höheren Anzahl an Ultraschall-Pulsen die Geschwindigkeit ermittelbar ist, mit der sich das Fahrzeug (10) und ein sich potenziell in dem besagten Bereich (13) des Umfeldes des Fahrzeugs (10) befindendes Objekt (15) relativ zueinander in Richtung des Aussendens beider Ultraschall-Burstsignale (22, 24) oder entgegengesetzt dazu bewegen.

2. Verfahren zur Untersuchung des Umfeldes eines Fahrzeugs nach Anspruch 1, **dadurch gekennzeichnet, dass** die Analyse der Echosignale (26, 28) mittels einer Signalverarbeitungseinheit (20) erfolgt.

3. Verfahren nach einem der Ansprüche 1 oder 2, **dadurch gekennzeichnet, dass** als Ultraschall-Sender (13a) und als Ultraschall-Empfänger (13b) ein die Funktionen beider erfüllender Ultraschall-Transducer (14) verwendet wird.

4. Verfahren nach einem der Ansprüche 1 bis 3, **dadurch gekennzeichnet, dass** das Ultraschall-Burstsignal (22) mit der geringeren Anzahl von Pulsen 10 Pulse bis 20 Pulse, insbesondere 16 Pulse, und/oder eine Länge von 190 $\mu$s bis 380 $\mu$s, insbesondere 300 $\mu$s, aufweist und dass das Ultraschall-Burstsignal (24) mit der höheren Anzahl von Pulsen 170 Pulse bis 220 Pulse, insbesondere 190 Pulse, und/oder eine Länge von 3,2 ms bis 4,0 ms, insbesondere 3,6 ms, aufweist.

5. Vorrichtung zur Untersuchung des Umfeldes eines Fahrzeugs mittels Analyse von Echosignalen, die durch Reflektion von ausgesandten Ultraschall-Signalen an einem Objekt im Umfeld des Fahrzeugs entstehen, mit

- einem Ultraschall-Sender (13a) zum innerhalb sich wiederholender Messzyklen jeweils zeitlich versetzt erfolgenden Aussenden von zwei Ultraschall-Burstsignalen (22, 24) in gleicher Richtung in denselben Bereich (13) des Umfeldes des Fahrzeugs (10), wobei das eine Ultraschall-Burstsignale (22) eine erste Anzahl von mit einer Frequenz aufeinanderfolgenden Ultraschall-Pulsen und das andere Ultraschall-Burstsignal (24) eine von der ersten Anzahl verschiedene zweite Anzahl von mit der gleichen oder einer anderen Frequenz aufeinanderfolgenden Ultraschall-Pulsen aufweist,

- einem Ultraschall-Empfänger (13b) zum Empfang von Echosignalen (26, 28) der beiden Ultraschall-Burstsignale (22, 24) bei Reflektion an einem sich potenziell in dem besagten Bereich (13) des Umfeldes des Fahrzeugs (10) befindenden Objekt (15) und

- einer Signalverarbeitungseinheit (20) zur Auswertung der beiden Echosignale (26, 28) zur Bestimmung verschiedener Parameter eines sich potenziell in dem besagten Bereich (13) des Umfeldes des Fahrzeugs (10) befindenden Objekts (15),

- wobei anhand des Echosignals (26) des Ultraschall-Burstsignals (22) mit der geringeren Anzahl an Ultraschall-Pulsen die Entfernung eines sich potenziell in dem besagten Bereich (13) des Umfeldes des Fahrzeugs (10) befindenden Objekts (15) zum Fahrzeug (10) ermittelt wird und

- wobei anhand des Echosignals (28) des Ultraschall-Burstsignals (24) mit der höheren Anzahl an Ultraschall-Pulsen die Geschwindigkeit ermittelbar ist, mit der sich das Fahrzeug (10) und ein sich potenziell in dem besagten Bereich (13) des Umfeldes des Fahrzeugs (10) befindendes Objekt (15) relativ zueinander in Richtung des Aussendens beider Ultraschall-Burstsignale (22, 24) oder entgegengesetzt dazu bewegen.

6. Vorrichtung nach Anspruch 5, **dadurch gekennzeichnet, dass** als Ultraschall-Sender (13a) und als Ultraschall-Empfänger (13b) ein die Funktionen beider erfüllender Ultraschall-Transducer (14) ausgebildet sind.

7. Vorrichtung nach einem der Ansprüche 5 oder 6, **dadurch gekennzeichnet, dass** das Ultraschall-Burstsignal (22) mit der geringeren Anzahl von Pulsen 10 Pulse bis 20 Pulse, insbesondere 16 Pulse, und/oder eine Länge von 190 $\mu$s bis 380 $\mu$s, insbesondere 300 $\mu$s, aufweist und dass das Ultraschall-Burstsignal (24) mit der höheren Anzahl von Pulsen 170 Pulse bis 220 Pulse, insbesondere 190 Pulse, und/oder eine Länge von 3,2 ms bis 4,0 ms, insbesondere 3,6 ms, aufweist.

**Claims**

1. A method for examining the environment of a vehicle by analyzing echo signals generated by reflection of transmitted ultrasonic signals at an object in the environment of the vehicle, wherein in the method

   - an ultrasonic burst signal (22) with a first number of ultrasonic pulses following each other at a frequency and, timely offset from this ultrasonic burst signal (22), an ultrasonic burst signal (24) with a second number of ultrasonic pulses following each other at the same or a different frequency are respectively transmitted into the same area (13) of the environment of the vehicle (10) and in the same direction by an ultrasonic transmitter (13a) within repeating measuring cycles, the second number of ultrasonic pulses being different from the first number of ultrasonic pulses,
   - timely offset echo signals (26, 28) are created at an object (15) potentially present in said area (13) of the environment of the vehicle (10) by reflection of the two ultrasonic burst signals (22, 24), which echo signals are received by an ultrasonic receiver (13b), and
   - the echo signals (26, 28) of both ultrasonic burst signals (22, 24) are evaluated to determine different parameters of an object (15) potentially present in said area (13) of the environment of the vehicle (10),
   - the distance of an object (15) potentially present in said area (13) of the environment of the vehicle (10) from the vehicle (10) being calculated based on the echo signal (26) of the ultrasonic burst signal (22) with the lower number of ultrasonic pulses, and
   - based on the echo signal (28) of the ultrasonic burst signal (24) with the higher number of ultrasonic pulses, the velocity can be calculated at which the vehicle (10) and an object (15) potentially present in said area (13) of the environment of the vehicle (10) move relative to each other in the direction of transmission of both ultrasonic burst signals (22, 24) or opposite thereto.

2. The method for examining the environment of a vehicle according to claim 1, **characterized in that** the analysis of the echo signals (26, 28) is performed using a signal processing unit (20).

3. The method for examining the environment of a vehicle according to any one of claims 1 or 2, **characterized in that** as the ultrasonic transmitter (13a) and as the ultrasonic receiver (13b), an ultrasonic transducer (14) is used that fulfills the functions of both.

4. The method according to any one of claims 1 to 3, **characterized in that** the ultrasonic burst signal (22) with the lower number of pulses comprises 10 to 20 pulses, in particular 16 pulses, and/or a length of 190 $\mu$s to 380 $\mu$s, in particular 300 $\mu$s, and the ultrasonic burst signal (24) with the higher number of pulses advantageously comprises 170 to 220 pulses, in particular 190 pulses, and/or a length of 3.2 ms to 4.0 ms, in particular 3.6 $\mu$s.

5. A device for examining the environment of a vehicle by analyzing echo signals generated by reflection of transmitted ultrasonic signals at an object in the environment of the vehicle, comprising

   - an ultrasonic transmitter (13a) for a timely offset transmission of two ultrasonic burst signals (22, 24) in the same direction into the same area (13) of the environment of the vehicle (10), the transmission occurring within repeating measuring cycles, one ultrasonic burst signal (22) comprising a first number of ultrasonic pulses following each other at a frequency and the other ultrasonic burst signal (24) comprising a second number of ultrasonic pulses different from the first number and following each other at the same or a different frequency,
   - an ultrasonic receiver (13b) for receiving echo signals (26, 28) of the two ultrasonic burst signals (22, 24) upon reflection at an object (15) potentially present in said area (13) of the environment of the vehicle (10), and
   - a signal processing unit (20) for the evaluation of the two echo signals (26, 28) to determine different parameters of an object (15) potentially present in said area (13) of the environment of the vehicle (10),
   - the distance of an object (15) potentially present in said area (13) of the environment of the vehicle (10) from the vehicle (10) being calculated based on the echo signal (26) of the ultrasonic burst signal (22) with the lower number of ultrasonic pulses, and

- based on the echo signal (28) of the ultrasonic burst signal (24) with the higher number of ultrasonic pulses, the velocity can be calculated at which the vehicle (10) and an object (15) potentially present in said area (13) of the environment of the vehicle (10) move relative to each other in the direction of transmission of both ultrasonic burst signals (22, 24) or opposite thereto.

6. The device according to claim 5, **characterized in that** an ultrasonic transducer (14) is designed as the ultrasonic transmitter (13a) and the ultrasonic receiver (13b), the ultrasonic transducer fulfilling the functions of both.

7. The device according to any one of claims 5 to 6, **characterized in that** the ultrasonic burst signal (22) with the lower number of pulses comprises 10 to 20 pulses, in particular 16 pulses, and/or a length of 190 $\mu$s to 380 $\mu$s, in particular 300 $\mu$s, and the ultrasonic burst signal (24) with the higher number of pulses advantageously comprises 170 to 220 pulses, in particular 190 pulses, and/or a length of 3.2 ms to 4.0 ms, in particular 3.6 $\mu$s.

**Revendications**

1. Procédé d'examen de l'environnement d'un véhicule au moyen de l'analyse de signaux d'écho résultant de la réflexion de signaux ultrasonores envoyés sur un objet dans l'environnement du véhicule, dans lequel lors du procédé

- dans la même zone (13) de l'environnement du véhicule (10) et dans la même direction, un signal ultrasonore en rafale (22) avec un premier nombre d'impulsions ultrasonores se succédant à une fréquence et un signal ultrasonore en rafale (24) en décalage temporel par rapport à ce signal ultrasonore en rafale (22) avec un deuxième nombre d'impulsions ultrasonores se succédant à une fréquence identique ou différente sont respectivement émis au moyen d'un émetteur d'ultrasons (13a) au cours de cycles de mesure répétitifs, dans lequel le deuxième nombre d'impulsions ultrasonores est différent du premier nombre d'impulsions ultrasonores,
- des signaux d'écho (26, 28) en décalage temporel résultent de la réflexion des deux signaux ultrasonores en rafale (22, 24) sur un objet (15) se trouvant potentiellement dans ladite zone (13) de l'environnement du véhicule (10), lesquels sont reçus au moyen d'un récepteur d'ultrasons (13b), et
- les signaux d'écho (26, 28) des deux signaux ultrasonores en rafale (22, 24) sont analysés afin de déterminer différents paramètres d'un objet (15) se trouvant potentiellement dans ladite zone (13) de l'environnement du véhicule (10),
- dans lequel la distance séparant le véhicule (10) d'un objet (15) se trouvant potentiellement dans ladite zone (13) de l'environnement du véhicule (10) est déterminée à l'aide du signal d'écho (26) du signal ultrasonore en rafale (22) avec le nombre inférieur d'impulsions ultrasonores et
- dans lequel, à l'aide du signal d'écho (28) du signal ultrasonore en rafale (24) avec le nombre supérieur d'impulsions ultrasonores, il est possible de déterminer la vitesse à laquelle le véhicule (10) et un objet (15) se trouvant potentiellement dans ladite zone (13) de l'environnement du véhicule (10) se déplacent l'un par rapport à l'autre dans la direction d'émission des deux signaux ultrasonores en rafale (22, 24) ou à l'opposé de celle-ci.

2. Procédé d'examen de l'environnement d'un véhicule selon la revendication 1, **caractérisé en ce que** l'analyse des signaux d'écho (26, 28) s'effectue au moyen d'une unité de traitement de signal (20).

3. Procédé selon l'une des revendications 1 ou 2, **caractérisé en ce qu'**un transducteur ultrasonore (14) remplissant les deux fonctions est utilisé en tant qu'émetteur d'ultrasons (13a) et récepteur d'ultrasons (13b) .

4. Procédé selon l'une des revendications 1 à 3, **caractérisé en ce que** le signal ultrasonore en rafale (22) avec le nombre inférieur d'impulsions comporte de 10 à 20 impulsions, en particulier 16 impulsions, et/ou une longueur de 190 à 380 $\mu$s, en particulier 300 $\mu$s, et **en ce que** le signal ultrasonore en rafale (24) avec le nombre supérieur d'impulsions comporte de 170 à 220 impulsions, en particulier 190 impulsions, et/ou une longueur de 3,2 à 4,0 ms, en particulier 3,6 ms.

5. Dispositif d'examen de l'environnement d'un véhicule au moyen de l'analyse de signaux d'écho résultant de la réflexion de signaux ultrasonores envoyés sur un objet dans l'environnement du véhicule, doté

- d'un émetteur d'ultrasons (13a) destiné à l'émission successive, au cours de cycles de mesure répétitifs, de deux signaux ultrasonores en rafale (22, 24) décalés dans le temps dans la même direction dans la même zone (13) de l'environnement du véhicule (10), dans lequel l'un signal ultrasonore en rafale (22) comporte un premier nombre d'impulsions ultrasonores se succédant à une fréquence et l'autre signal ultrasonore en rafale (24) comporte un deuxième nombre d'impulsions ultrasonores différent du premier se succédant à une fréquence identique ou différente,

- d'un récepteur d'ultrasons (13b) destiné à la réception de signaux d'écho (26, 28) des deux signaux ultrasonores en rafale (22, 24) en cas de réflexion sur un objet (15) se trouvant potentiellement dans ladite zone (13) de l'environnement du véhicule (10) et

- d'une unité de traitement de signal (20) destinée à analyser les deux signaux d'écho (26, 28) afin de déterminer différents paramètres d'un objet (15) se trouvant potentiellement dans ladite zone (13) de l'environnement du véhicule (10),

- dans lequel la distance séparant le véhicule (10) d'un objet (15) se trouvant potentiellement dans ladite zone (13) de l'environnement du véhicule (10) est déterminée à l'aide du signal d'écho (26) du signal ultrasonore en rafale (22) avec le nombre inférieur d'impulsions ultrasonores et

- dans lequel, à l'aide du signal d'écho (28) du signal ultrasonore en rafale (24) avec le nombre supérieur d'impulsions ultrasonores, il est possible de déterminer la vitesse à laquelle le véhicule (10) et un objet (15) se trouvant potentiellement dans ladite zone (13) de l'environnement du véhicule (10) se déplacent l'un par rapport à l'autre dans la direction d'émission des deux signaux ultrasonores en rafale (22, 24) ou à l'opposé de celle-ci.

6. Dispositif selon la revendication 5, **caractérisé en ce qu'**un transducteur ultrasonore (14) remplissant les deux fonctions est réalisé en tant qu'émetteur d'ultrasons (13a) et récepteur d'ultrasons (13b).

7. Dispositif selon l'une des revendications 5 ou 6, **caractérisé en ce que** le signal ultrasonore en rafale (22) avec le nombre inférieur d'impulsions comporte de 10 à 20 impulsions, en particulier 16 impulsions, et/ou une longueur de 190 à 380 μs, en particulier 300 μs, et **en ce que** le signal ultrasonore en rafale (24) avec le nombre supérieur d'impulsions comporte de 170 à 220 impulsions, en particulier 190 impulsions, et/ou une longueur de 3,2 à 4,0 ms, en particulier 3,6 ms.

15

13

14  14  14  14

18  16  12

13b  13b  13b  13b

13a  13b  13a  13a  13a

20

10

Fig. 1

Fig. 2

Fig. 3

Fig. 4

EP 4 258 021 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014180609 A1